# EUROPÄISCHE PATENTSCHRIFT

(11) **EP 0 523 192 B1**
(45) Veröffentlichungstag und Bekanntmachung des Hinweises auf die Patenterteilung: **22.05.1996**
(21) Anmeldenummer: 91918067.9
(22) Anmeldetag: 30.10.1991
(51) Int. Cl.: B60R 21/02

(54) **SCHWENKBARES INSASSEN-RÜCKHALTESYSTEM FÜR KRAFTFAHRZEUGE**
PIVOTED PASSENGER RESTRAINT SYSTEM FOR MOTOR VEHICLES
SYSTEME PIVOTANT DE RETENUE DES PASSAGERS POUR VEHICULES A MOTEUR

(30) Priorität: 01.02.1991 DE 4102982
(43) Veröffentlichungstag der Anmeldung: 20.01.1993
(73) Patentinhaber: ITT Automotive Europe GmbH, D-60441 Frankfurt am Main (DE)
(72) Erfinder: REUBER, Gerhadt, D-5962 Drolshagen (DE); BRAUN, Achim, D-5223 Nümbrecht (DE); BAIER, Siegfried, D-5226 Reichshof-Mittelagger (DE)
(74) Vertreter: Portwich, Peter
(86) Internationale Anmeldenummer: EP9102051
(87) Internationale Veröffentlichungsnummer: WO9213739

(56) Entgegenhaltungen:
- DE-A- 2 537 212
- DE-A- 2 634 222
- DE-A- 3 908 713
- FR-A- 1 124 164
- US-A- 2 883 123
- US-A- 4 951 963

## Beschreibung

Die Erfindung betrifft ein Insassen-Rückhaltesystem zum Rückhalten der Insassen beim Aufprall eines Fahrzeugs. Ein bekanntes Beispiel hierfür sind Sicherheitsgurte. Als aktive Rückhaltesysteme sind weiterhin Luftsäcke vorgeschlagen worden, die in Fahrtrichtung vor den Insassen installiert und in Aufprallsituationen aufgeblasen werden. Nachteilig bei den bekannten Maßnahmen ist es, daß Sicherheitsgurte vielfach nicht angelegt werden bzw. nicht zur Verfügung stehen. Bei Luftsäcken besteht die Gefahr, daß sie durch ihre explosionsartige Ausdehnung und den entstehenden Überdruck ein mögliches Panikverhalten der Insassen noch verstärken. Beide bekannten Maßnahmen können darüber hinaus nicht den Effekt vermeiden, daß der Fahrgast unter dem Gurt bzw. dem Luftsack hindurch in den Fußraum des Fahrzeuges rutscht und dort ungeschützt aufprallt.

Aus der DE-OS 25 37 212 ist weiterhin ein Rückhaltesystem bekannt, welches beim Einsteigen des Fahrers mittels einer Tasteinrichtung in einen geeigneten Abstand zum Knie bzw. Schienbein des Fahrers herausgefahren und dort zur Vermeidung des o.g. "Tauch"-Effekt (sub merging) belassen wird. Nachteilig bei einem derartigen System ist, daß es, abgesehen von optischen Gesichtspunkten, die Bewegungsfreiheit der Insasen beeinträchtigt und das über die gesamte Lebensdauer des Fahrzeuges, obwohl die zu verhütende Gefahrensituation möglicherweise nie eintritt.

Es ist daher in der DE-A-26 34 222 eine Sicherheitseinrichtung mit einem Knieaufschlagelement gemäß dem Oberbegriff des Anspruchs 1 vorgeschlagen worden, bei welcher im Aufprallfall eine Knieprallplatte zu den Knien des Fahrers hin schwenkt. Als Antrieb für dieses Aufprallelement wird u.a. vorgeschlagen, an beiden seitlichen Enden der Knieprallplatte eine Lenkeranordnung anzubringen, welche jeweils mindestens einen Lenker aufweist, der beispielsweise nach Art eines bekannten Gurtstraffers teleskopartig ausfahrbar ist. Wie allerdings nach einem Aufprallfall eine derartige Knieprallplatte wieder eingefahren werden soll, wird nicht beschrieben. Zudem ist die Ausfahrbewegung der beiden Gurtstraffer nicht gekoppelt, was zu Betriebsstörungen durch mangelnde Synchronisation der Bewegung führen könnte.

Die Aufgabe der vorliegenden Erfindung besteht daher darin, ein Rückhaltesystem gemäß dem Oberbegriff des Anspruchs 1 zu schaffen, welches eine synchronisierte Ausfahrbewegung des Aufprallelementes erlaubt und auf einfache Weise ein Zurückfahren des Aufprallelementes nach einem Aufprallfall ermöglicht.

Diese Aufgabe wird gelöst in Verbindung mit den kennzeichnenden Merkmalen des Anspruchs 1.

Eine Verbesserung der Sicherheitswirkung läßt sich in Weiterbildung der Erfindung durch die Anwendung der Merkmale nach Anspruch 2 erreichen, indem vorzugsweise zusätzlich zu der Schwenkbewegung noch eine gradlinige Belegung des Aufprallelementes zu der zu schützenden Körperregion des Fahrgastes hin ermöglicht wird. Hierdurch läßt sich die Stellung des Aufprallelementes an die des Fahrgastes und seine Körpergröße besser anpassen. Bei einer kombinierten Bewegung läßt sich gleichzeitig auch noch eine erhöhte Geschwindigkeit für das Herausfahren des Aufprallelementes erreichen.

Dabei kann der Bewegungsablauf der beiden Bewegungen nacheinander erfolgen, um beispielsweise aufgrund des geometrischen Aufbaues des Fahrzeuges ein Herausschwenken erst zu ermöglichen, aber auch gleichzeitig erfolgen.

Bei dem Aufprallelement handelt es sich vorzugsweise um eine durchgehende Platte, um unabhängig von den Sitzstellungen des Fahrgastes eine gleichbleibende Sicherheit zu erreichen. Die geometrischen Vorgaben in einem Fahrzeug mögen es aber auch geraten erscheinen, mehrere kleinere Aufprallelemente gleichzeitig herauszufahren.

Vorteilhafterweise läßt sich gemäß der Verbesserung nach Anspruch 4 eine derartige Prallplatte als untere Begrenzung des Armaturenteils im Fahrzeug ausgestalten bzw. als untere Begrenzung eines Ablagefachs, Handschuhfachs oder ähnlichem.

In Weiterbildung der Erfindung läßt sich die erfindungsgemäße Sicherheitseinrichtung als aktive Sicherheitseinrichtung gestalten. Hierzu wird man zweckmäßigerweise gemäß der Merkmalskombination nach Anspruch 6 für das Herausfahren der Rückhalteeinrichtung derartige Energiespeicher vorsehen, die zu einem schlagartigen Herausbewegen des Aufprallelements in der Lage sind.

Eine derartige Anordnung wird vorzugsweise in ein eine lineare Bewegung ausführendes Betätigungsglied eingebaut, wobei dann durch die entsprechende Anordnung der Prallplatte die lineare Bewegung in eine Schwenkbewegung der Platte umgesetzt werden muß.

Die hier mit Vorzug einzusetzenden Schwenkhebel können in Weiterbildung der Erfindung symmetrisch zur Prallplatte an deren beiden Enden und am Fahrzeug befestigt sein.

Ausführungsbeispiele der Erfindung werden nachfolgend anhand der Zeichnung erläutert. Darin zeigt
- Fig. 1: in schematischer und teilweise abgebrochener Darstellung den Schwenkmechanismus einer Prallplatte, die an den Seitenwänden und dem Armaturenbrett befestigt ist,
- Fig. 2: in teilweise geschnittener und symbolischer Darstellung ein Betätigungsglied zur Erzeugung einer Linearbewegung, die in eine Schwenkbewegung und/oder Linearbewegung von der Prallplatte umgesetzt wird,
- Fig. 3: in symbolischer Darstellung einen Energiespeicher in geladenem und entladenem Zustand,
- Fig. 4: in symbolischer Darstellung das mit einem Energiespeicher versehene Betätigungsglied gemäß Fig. 2 einschließlich der Schwenkhebel der Prallplatte gemäß Fig. 1,
- Fig. 5: in symbolischer Darstellung eine Draufsicht auf die Rückhalteeinrichtung mit einer Bewegungssteuerung und Einrichtung zum Aufladen der Energiespeicher,
- Fig. 6: in vergrößerter symbolischer und herausgebrochener Darstellung die Anordnung der Schwenkhebel nach Fig. 1,
- Fig. 7: in symbolischer Darstellung die Sitzposition eines Fahrgastes außerhalb einer Gefahrensituation,
- Fig. 8: die Sitzposition eines Fahrgastes gemäß Fig. 7 mit herausgefahrenem Aufprallelement,
- Fig. 9-11: die Anwendung des erfindungsgemäßen Rückhaltesystems zum Schutz des Kniebereiches sowohl für einen Fahrgast auf einem Vordersitz als auch für einen Fahrgast auf einem Hintersitz.

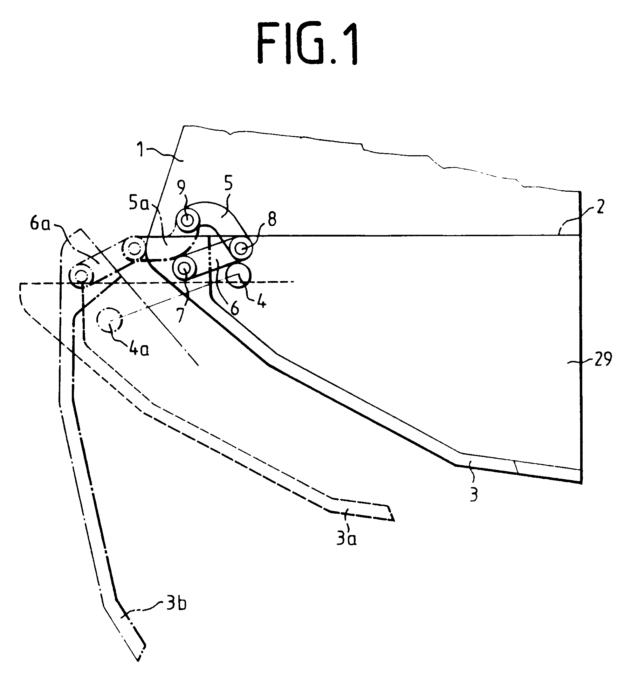

Fig. 1 zeigt eine Seitenwand 29 des Kraftfahrzeugs und einen Teil des Armaturenbrettes 1. An dem Armaturenbrett 2 ist über ein Scharnier 9 ein erster Schwenkhebel 5 drehbar gelagert. An dem anderen Ende des Schwenkhebels 5 ist über ein zweites Scharnier 8 das zum Armaturenbrett 1 hinweisende Ende eines Aufprallelementes 3 drehbar gelagert. An dem als Aufprallplatte ausgestalteten Aufprallelement 3 greift eine Schwenkachse 4 an, die durch ein in der Zeichnung nicht dargestelltes Betätigungsglied linear durch Herausfahren verschiebbar ist.

Durch eine derartige Verschiebung gelangt die Schwenkachse 4 in die Stellung 4a. Eine derartige Verschiebung würde ohne die Wirkung der Schwenkhebel 5,6 dazu führen, daß die Aufprallplatte 3 in die gestrichelt gezeichnete Stellung 3a gelangte.

Hierbei ist allerdings nicht die Wirkung der beiden Schwenkhebel 5 und 6 berücksichtigt, durch welche die Aufprallplatte 3 zusätzlich zu der Parallelverschiebung noch eine Schwenkbewegung durchführt. Durch die Wirkung dieser Schwenkhebel 5,6 gelangen nach der Verschiebung die Schwenkachse 4 in die Stellung 4a und die Bauelemente 3,4,5 und 6 in die strichpunktiert gezeichnete Lage, in der diese Bauelemente unter den Nummern 3b,5a,6a und 7a aufgeführt sind.

Der Vorteil dieser Schwenkhebel ist ohne weiteres einzusehen, da hierdurch zum einen verhindert wird, daß das obere Ende der nur herausgefahrenen Aufprallplatte 3a zu weit und mit spitzem Ende versehen zum Fahrgast hinweist, dagegen bei der erfindungsgemäßen Ausführungsform die Spitze am Schwenkende der Platte vom Fahrgast zurückgenommen ist, während der Fußbodenraum weit nach vorne liegend durch die Platte 3b abgeriegelt wird und so verhindert, daß der Fahrgast in den Fußraum im Aufprallfall rutschen kann.

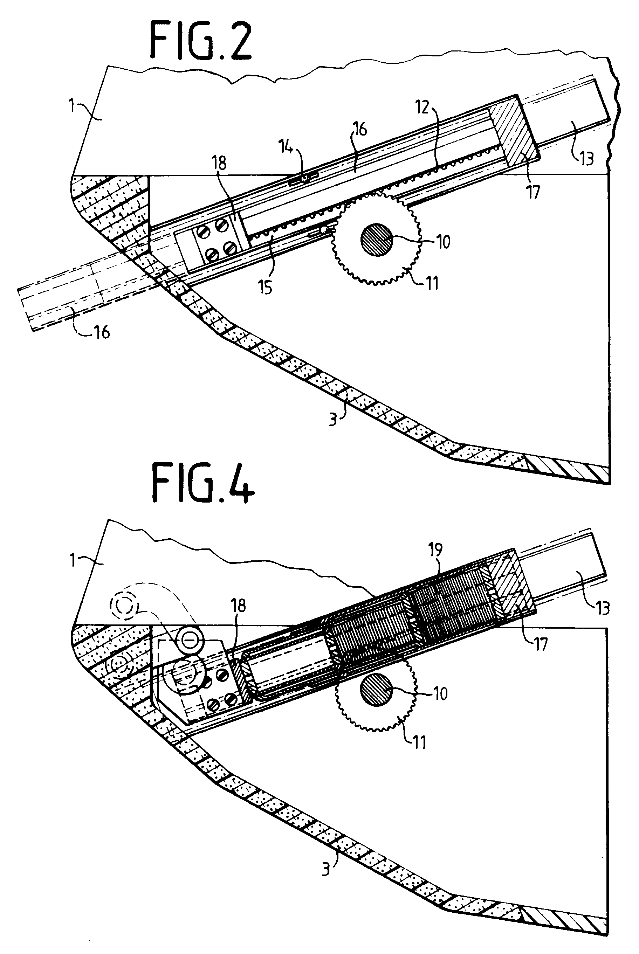

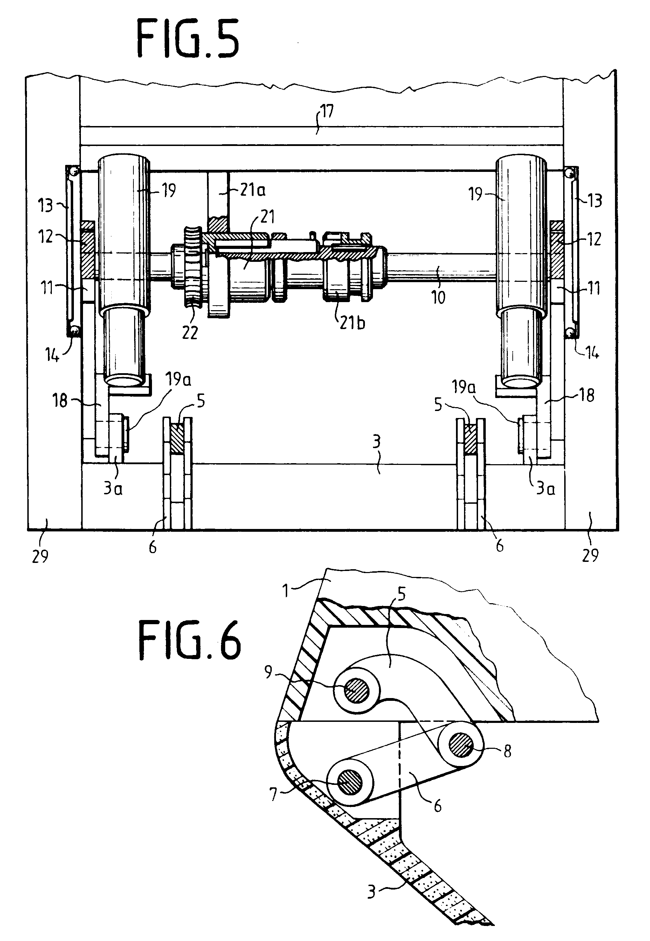

Fig. 2 zeigt in symbolischer Darstellung einen erfindungsgemäßen Aufprallmechanismus, mit dem die Schwenkachse Fig. 4 in Fig. 1 in die Lage 4a gebracht und damit die Aufprallplatte 3 herausgeschwenkt werden kann. Dabei ist ein die beiden Seitenwände 29 des Fahrgastraumes miteinander verbindender Balken 17 vorgesehen, der mit einer Schiene 16 verbunden ist. Die Führungsschiene 16 umfaßt eine Führungsplatte 13 an ihren äußeren Kanten, so daß diese von den beiden seitlichen Schienenabschnitten der Schiene 6 umfaßt und dort in Längsrichtung verschiebbar angeordnet sind. Zur leichteren Verschiebbarkeit dient ein Kugellager, wie es durch die Kugel 14 angedeutet ist.

Zwischen den Seitenwänden 29 ist eine Welle 10 drehbar, ansonsten aber ortsfest gelagert, auf der ein Antriebszahnrad 11 sitzt. Dieses Antriebszahnrad wirkt mit seinen Zahnflanken auf eine mit der Führungsplatte 13 fest verbundene Zahnstange 12 ein. Wird die Führungsplatte 13 in der Zeichnung nach links in ihre strichpunktiert gezeichnete Lage 16 verschoben, so wird hierdurch über die Flanken des Zahnrades 11 die als Synchronwelle dienende Welle 10 angetrieben. Diese Synchronwelle 10 hat u.a. die Aufgabe, ein in Fig. 5 dargestelltes zweites, symmetrisch hinsichtlich der Aufprallplatte 3 angeordnetes Betätigungsglied in seiner Bewegung mit dem in Fig. 2 dargestellten Betätigungsglied zu synchronisieren, indem keines der beiden Betätigungsglieder die zugehörige Führungsplatte 13 schneller bewegen kann, als das andere.

In Fig. 2 ist weiterhin noch eine Halterung 18 zu erkennen, die in Form eines Winkels auf die Führungsplatte 13 aufgeschraubt ist. Diese Halterung dient als Angriffspunkt für einen in Fig. 2 nicht dargestellten Energiespeicher, der sich an seinem anderen Ende an dem ortsfesten Balken 17 abstützt, so daR im Auslösungsfall der Energiespeicher auf die Halterung 18 einwirkt und damit die Führungsplatte 13 in Fig. 2 nach links bewegt.

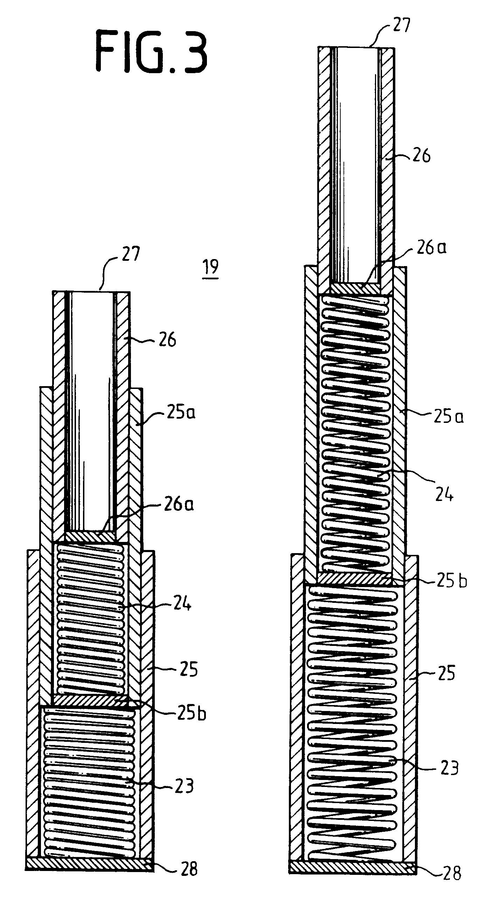

In Fig. 3 ist der das Betätigungsglied antreibende Energiespeicher einmal im geladenen Zustand und einmal im entladenen Zustand dargestellt. Der Energiespeicher besteht aus einer ersten, zweiten und dritten Zylinderhülse 25,25a und 26, die teleskopartig ineinander verschiebbar angeordnet sind. Jede der drei Zylinderhülsen besitzt einen ersten, zweiten bzw. dritten Boden 25,25b bzw. 26a, der die Zylinderhülsen in Fig. 3 unten verschließt, so daß drei ineinander verschachtelte nach oben offene Hülsen entstehen. Zwischen der ersten Hülse 25 und der zweiten Hülse 25a ist eine erste Feder 23 angeordnet, während zwischen der zweiten Hülse 25a und der dritten Hülse 26 sich eine zweite Feder 24 befindet. Diese beiden Federn haben das Bedürfnis, aufgrund der Federspannungen die jeweils über ihnen liegende Hülse nach außen zu drücken, so daß beim Entspannen des mechanischen Energiespeichers, wie in Fig. 3 rechts gezeigt, die dritte Hülse 26 mit ihrem offenen Ende die maximale Ausdehnung gegenüber dem ersten Boden 28 besitzt.

Die Verwendung des teleskopartigen Energiespeichers gemäß Fig. 3 hat den besonderen Vorteil, daß zum einen dieser Energiespeicher im geladenen Zustand sehr wenig Raum beansprucht, zum anderen aber die erreichbare Beschleunigung besonders groß ist, weil die beiden Federn in den inneren Hülsen 25a und 26 beim Auslösen des Speichers gleichzeitig sich entspannen können und damit dem oberen Ende 27 des Speichers eine erhebliche Geschwindigkeit verleihen.

Fig. 4 zeigt das Zusammenwirken des in Fig. 3 dargestellten Energiespeichers 19 mit dem Betätigungsglied nach Fig. 2, wie dies schon weiter oben beschrieben wurde. Außerdem ist in dieser Figur nochmals die Lage der Schwenkhebel im Ruhezustand der Rückhalteeinrichtung gestrichelt angedeutet. Entsprechendes gilt für die Schwenkachse 4, die in Fig. 4 ebenfalls strichpunktiert gezeigt ist. Es ist weiterhin gezeigt, daß die Schwenkachse 4 durch das vordere Ende der Führungsplatte 13 über die Halterung 18 von dem Energiespeicher 19 angetrieben wird.

Fig. 5 zeigt in symbolischer Darstellung und in Draufsicht die Betätigungssteuerung gemäß der Erfindung.

Die Fig. 5 stellt die Anordnung der Schutzeinrichtung in Draufsicht und ohne Abdeckung dar. Die Seitenwände 29 sind in dem Armaturenbrett integriert und mit der Trennwand zwischen Motorraum und Fahrgastraum fest verbunden. Zwischen den Seitenwänden ist die festmontierte Trägerbrücke 17 weiter oben als Balken bezeichnet angeordnet. Auf der Trägerbrücke sind die Antriebselemente - Federteleskope 19 -, die Konsole 21a zur Aufnahme einer Kupplung 21 und eine weitere Konsole für die Rückfahrmotoren (sind nicht dargestellt). Die Synchronwelle 10 ist beidseitig in den Seitenwänden drehbar gelagert. Auf dieser Welle unterhalb der Zahnstangen 12 befinden sich die Zahnräder 11. Neben der Kupplung ist das Schneckenrad 22 zum Zurückfahren der Prallplatte 3 angeordnet. In den Seitenwänden 29 sind die Linear-Führungselemente 13,14 eingelassen, und zwar so, daß deren Seite 13 mit den Wanden fest verbunden ist, und auf der Seite 14 die Zahnstangen 12 befestigt sind. So kann sich die Zahnstange linear bewegen, wenn die Synchronwelle ausgekuppelt ist. Auf den Zahnstangen sind die L-förmigen Halterungen 18 befestigt, wobei an deren verlängerten Seiten eine Bohrung zur Aufnahme der Bolzen 19a (Achse) angeordnet ist. Die andere Seite der Halterung 18 ist mit der Vorderseite des Teleskopantriebs 19 fest verbunden.

Die Prallplatte 3 ist zwischen den Seitenwänden beweglich untergebracht. Der untere schalenartige Teil dieser Platte erstreckt sich etwa bis in die Tiefe der Trägerbrücke und bildet die Decke des Fußraumes. Die Prallplatte hängt nur an den Laschen 3a bzw. an dem Bolzen 19a. Die Laschen 3a sind in der verbreiterten Oberkante der Prallplatte verankert, wo auch die Hebel 6 (das erste Glied des Schwenkmechanismus) drehbar gelagert ist. (siehe Fig. 6).

Der Bewegungsablauf ist dabei wie folgt:
In der Fig. 5 sind die Teleskopantriebe 19 in zusammengepreßtem Zustand dargestellt. Die Federkraft wirkt auf die Trägerbrücke 17 und auf die Halterung 18, die durch die kinetische Kette: Zahnstange, Zahnrad, Synchronwelle, Kupplung in der aufgespannten Position gehalten wird ("stand by"-Position). Wenn die Snychronwelle durch die Kupplung ausgekoppelt wird, dehnt sich der Teleskopantrieb aus, wobei die Halterung und die daran befestigten Teile, somit auch die Prallplatte, in die Richtung eines der Fahrzeuginssassen geschoben werden. Bei dem Schwenkmechanismus ist die maximale Hublänge der Oberkante der Prallplatte kürzer als die Hublänge des Aufhängebereiches der Prallplatte, und somit entsteht eine Dreh- bzw. Schwenkbewegung der Prallplatte um die Achse 19a. Dadurch wird die Prallplatte nicht nur in die Nähe der Knie des Beifahrers geschoben, sondern auch die Höhe des Fußraumes gleichzeitig reduziert, wodurch das teilweise Hineingepreßtwerden des Fahrzeuginsassen verhindert werden kann.

Statt des hier beschriebenen Antriebskonzept mittels im Normalzustand vorgespannter Federn läßt sich auch wie folgt vorgehen:
Im Gegensatz zu den bekannten Federn wird ein pneumatischer Antrieb vorgeschlagen. Über die Pneumatikpumpe kann der Knieschutz mittels Zylinder mit Überdruck oder Vakuum bewegt werden. Gleichzeitig füllt die Pumpe einen Druckspeicher mit ca. 3 bar Luftdruck. Über ein Schaltventil wird bei einem drohenden Unfall der Druckspeicher durch einen Sensor angesteuert und der Knieschutz in kurzer Zeit ausgefahren.

In Fig. 6 ist nochmals der schon im Zusammenhang mit Fig. 1 beschriebene Schwenkmechanismus dargestellt, in dem die beiden Schwenkhebel 5 und 6 und die die entsprechenden Scharniere 7,8,9 bildenden Achsen sowie die Prallplatte 3 und das Armaturenbrett symbolisch und in teilweise gebrochener Darstellung vergrößert herausgezeichnet wurden.

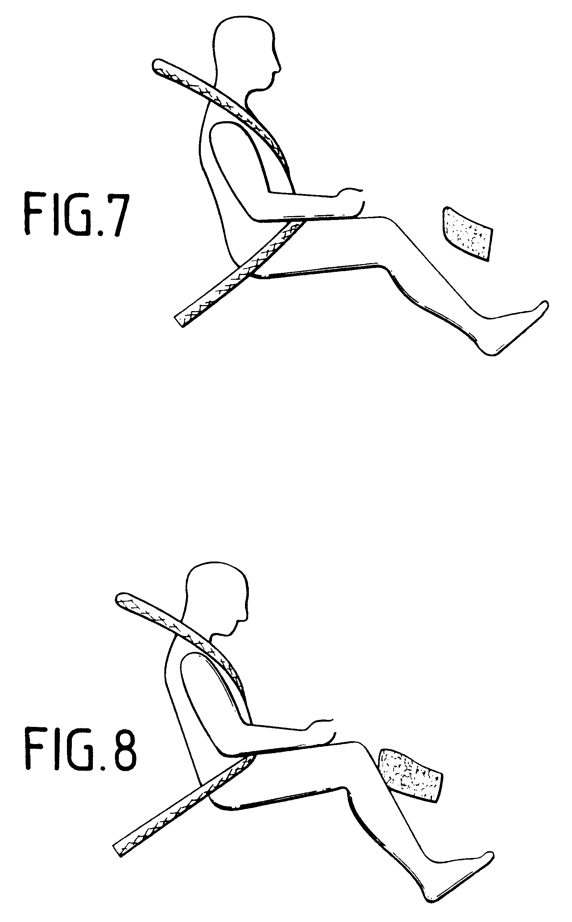

Fig. 7 und 8 zeigen symbolisch die Wirkung der erfindungsgemäßen Rückhalteeinrichtung, die aktiv im Gefahrenfalle betätigt wird und durch Abriegeln des Fußraumes im Fahrzeug ein Abtauchen des Fahrgastes verhindern soll. Die Abtauchbewegung des Fahrgastes wird durch ein schnelles Herausfahren eines Knieschutzes verhindert. Fig. 7 deutet zum einen die Bewegungsfreiheit des Fahrgastes im Normalzustand an, während Fig. 8 den herausgefahrenen Zustand des Knierückhaltesystems andeutet.

## Patentansprüche

1. Rückhaltesystem für Insassen eines Kraftfahrzeugs mit einem zu einem im Aufprallfall zurückhaltenden Körperteil hin bewegbaren, vor dem Fahrzeuginsassen am Fahrzeug befestigten Aufprallelement (3), wobei das Aufprallelement (3) horizontal um eine quer zur Fahrzeuglängsachse verlaufende Achse (19a) schwenkbar ist, wobei an beiden seitlichen Enden des Aufprallelements (3) je ein auf das Aufprallelement () wirkender Energiespeicher (19) und je ein Betätigungsglied (12 - 18) angeordnet sind, dadurch **gekennzeichnet**, daß eine Synchronwelle (10) die Betätigungsglieder (12 - 18) miteinander verbindet und ihre Bewegung synchronisiert sowie zum Zurückfahren des Aufprallelementes (3) nach einem Aufprall dient.

2. Rückhaltesystem nach Anspruch 1, dadurch **gekennzeichnet**, daß die Bewegung im Aufprallfall aus einer Ausfahrbewegung und einer Schwenkbewegung zusammengesetzt ist.

3. Rückhaltesystem nach einem der vorangegangenen Ansprüche, dadurch **gekennzeichnet**, daß das Aufprallelement (3) eine Platte ist.

4. Rückhaltesystem nach Anspruch 3, dadurch **gekennzeichnet**, daß die Platte (3) in eingezogener Stellung die obere Begrenzung für den Fußraum des Fahrgastes bildet.

5. Rückhaltesystem nach einem der vorangegangenen Ansprüche, dadurch **gekennzeichnet**, daß das Rückhaltesystem mit einem die Ausfahrbewegung auslösenden Sensor versehen ist.

6. Rückhaltesystem nach einem der vorangegangenen Ansprüche, dadurch **gekennzeichnet**, daß die Energiespeicher jeweils durch eine Teleskopfederanordnung (25,25a,26), eine Torsionsfederanordnung, eine Spiralfederanordnung oder durch einen mit einem Druckspeicher versehenen pneumatischen Antrieb gebildet sind.

7. Rückhaltesystem nach Anspruch 6, dadurch **gekennzeichnet**, daß die Teleskopfederanordnung in einer eine lineare Bewegung ausführenden teleskopartigen Anordnung von Zylinderhülsen (25,25a,26) angeordnet ist.

8. Rückhaltesystem nach einem der vorhergehenden Ansprüche, dadurch **gekennzeichnet**, daß das Aufprallelement (3) über mindestens einen Schwenkhebel (5,6) am Fahrzeug, vorzugsweise Armaturenbrett (1), befestigt ist.

9. Rückhaltesystem nach einem der vorhergehenden Ansprüche, dadurch **gekennzeichnet**, daß die Synchronwelle (10), zum Zurückfahren des Aufprallelementes von einem Elektromotor antreibbar ist.

## Claims

1. A retaining system for passengers of an automotive vehicle, including an impact element (3) which is movable toward the part of the body which has to be retained in case of a crash and which is fixed to the vehicle in front of the passenger of the vehicle, with the impact element (3) being swingable horizontally about an axis (19a) which extends transversely to the longitudinal axis of the vehicle, and with each one energy accumulator (19) acting upon the impact element and each one actuating member (12 to 18) is arranged on either lateral end of the impact element (3),
**characterized** in that a synchronizing shaft (10) interconnects the actuating members (12 - 18) and synchronizes their movements and serves to return the impact element (3) after an impact.

2. A retaining system as claimed in claim 1,
**characterized** in that the movement in case of an impact is composed of an extending movement and a swinging movement.

3. A retaining system as claimed in anyone of the preceding claims,
**characterized** in that the impact element (3) is a plate.

4. A retaining system as claimed in claim 3,
**characterized** in that, in retracted position, the impact plate (3) forms the upper boundary for the foot space of the passenger.

5. A retaining system as claimed in anyone of the preceding claims,
**characterized** in that the retaining system has a sensor which triggers the extending movement.

6. A retaining system as claimed in anyone of the preceding claims,
**characterized** in that the energy accumulator is constituted by a telescoping spring arrangement (25, 25a, 26), by a torsion spring arrangement, a spiral spring arrangement, or by a pneumatic drive including a pressure accumulator.

7. A retaining system as claimed in claim 6,
**characterized** in that the telescoping spring arrangement is positioned within a telescoping arrangement of cylindrical bushings (25, 25a, 26) which performs a linear movement.

8. A retaining system as claimed in anyone of the preceding claims,
**characterized** in that the impact element (3) is fixed to the vehicle, preferably to the instrument panel (1), by at least one swinging lever (5, 6).

9. A retaining system as claimed in anyone of the preceding claims,
**characterized** in that the synchronizing shaft (10) is drivable by an electric motor to return the impact element.

## Revendications

1. Système de retenue pour les occupants d'un véhicule automobile, comprenant un élément antichoc (3) fixé sur le véhicule en avant du passager du véhicule et agencé de façon à pouvoir être déplacé vers une partie du corps qui doit être retenue dans le cas d'une collision, l'élément antichoc (3) étant agencé de façon à pouvoir basculer autour d'un axe (19a) horizontal orienté transversalement à l'axe longitudinal du véhicule, tandis que, sur chacune des deux extrémités latérales de l'élément antichoc (3), il est disposé un accumulateur d'énergie (19) exerçant son action sur l'élément antichoc (3) et un organe d'actionnement (12 - 18), caractérisé en ce qu'un arbre de synchronisation (10) réunit entre eux les organes d'actionnement (12 - 18), synchronise leur mouvement et sert à faire reculer l'élément antichoc (3) après une collision.

2. Système de retenue selon la revendication 1, caractérisé en ce que le mouvement eu cas de collision est composé d'un mouvement de déploiement et d'un mouvement de basculement.

3. Système de retenue selon l'une des revendications précédentes, caractérisé en ce que l'élément antichoc (3) est une plaque.

4. Système de retenue selon la revendication 3, caractérisé en ce que la plaque (3) constitue, en position rétractée, la limite supérieure pour l'espace prévu pour les pieds du passager.

5. Système de retenue selon l'une des revendications précédentes, caractérisé en ce que le système de retenue est pourvu d'un capteur déclenchant le mouvement de déploiement.

6. Système de retenue selon l'une des revendications précédentes, caractérisé en ce que les accumulateurs d'énergie sont formés chacun au moyen d'un agencement de ressorts télescopiques (25, 25a, 26), un agencement de ressort de torsion, un agencement de ressort hélicoïdal ou au moyen d'un entraînement pneumatique pourvu d'un accumulateur de pression.

7. Système de retenue selon la revendication 6, caractérisé en ce que l'agencement de ressorts télescopiques est disposé dans un agencement télescopique de manchons cylindriques (25, 25a, 26) qui exécute un mouvement rectiligne.

8. Système de retenue selon l'une des revendications précédentes, caractérisé en ce que l'élément antichoc (3) est fixé sur le véhicule, de préférence le tableau de bord (1), par l'intermédiaire d'au moins un levier basculant (5, 6).

9. Système de retenue selon l'une des revendications précédentes, caractérisé en ce que l'arbre de synchronisation (10) est agencé de façon à pouvoir être entraîné par un moteur électrique, en vue de faire reculer l'élément antichoc.
